# EUROPÄISCHE PATENTSCHRIFT

(11) **EP 2 955 416 B1**
(45) Veröffentlichungstag und Bekanntmachung des Hinweises auf die Patenterteilung: **28.10.2020**
(21) Anmeldenummer: 15167944.6
(22) Anmeldetag: 18.05.2015
(51) Int. Cl.: F16H 21/44, B65G 25/00, F16H 21/04, B65B 65/02, B65G 27/18, F16H 25/20, B65B 65/00

(54) **ANTRIEBSVORRICHTUNG UND STATION EINER VERPACKUNGSMASCHINE**
DRIVE DEVICE AND STATION OF A PACKAGING MACHINE
DISPOSITIF D'ENTRAÎNEMENT ET STATION D'UNE MACHINE D'EMBALLAGE

(30) Priorität: 06.06.2014 DE 102014210963
(43) Veröffentlichungstag der Anmeldung: 16.12.2015
(73) Patentinhaber: Optima consumer GmbH, 74523 Schwäbisch Hall (DE)
(72) Erfinder: MAIER, Stefan, 83250 Marquartstein (DE); METZ, Mathias, 83278 Traunstein (DE); MÜHLBERGER, Korbinian, 83246 Unterwössen (DE)
(74) Vertreter: Patentanwälte Ruff, Wilhelm, Beier, Dauster & Partner mbB

(56) Entgegenhaltungen:
- EP-A1- 0 569 937
- EP-A1- 2 218 575
- FR-A1- 2 730 483
- US-A- 2 245 417
- US-A- 5 339 749

## Beschreibung

### ANWENDUNGSGEBIET UND STAND DER TECHNIK

Die Erfindung betrifft eine Hubvorrichtung mit einer Antriebsvorrichtung und eine Station einer Verpackungsmaschine mit einer Antriebsvorrichtung.

Bei einer Station einer Verpackungsmaschine handelt es sich beispielsweise um eine Formstation, eine Stanzstation, eine Verschließstation, eine Dosierstation, eine Füllstation oder dergleichen. In einer Verpackungsmaschine sind vorzugsweise mehrere Stationen zu einer Linie zusammengestellt. Die Stationen weisen ein Bauteil auf, welches eine hin- und hergehende Bewegung in einer ersten Richtung durchführt. Bei dem Bauteil handelt es sich beispielsweise um eine Platte eines Ober- oder eines Untertischs einer Formstation, welche ein Formwerkzeug trägt.

Aus dem Stand der Technik, beispielsweise aus DE 84 29 209 U1 und/oder EP 0 569 937 A1, sind Kniehebelantriebe für Form- oder Stanzstationen bekannt, mittels welcher Formwerkzeuge zu einer Hub- und Senkbewegung antreibbar sind.

EP 2 218 575 A1 zeigt eine Arbeitsstation mit einem Hubwerk umfassend eine erste Hubvorrichtung zum Bewirken einer ersten Hubbewegung mit großem Hub und eine zweite Hubvorrichtung zum Bewirken einer zweiten Hubbewegung mit kleinem Hub.

Aus FR 2 730 483 A1, US 5, 339,749 sind Lasthebemechanismen umfassend über Kreuz angeordnete Hebel bekannt. US 2,245,417 zeigt eine Hebebühne für ein Fahrzeug mit zwei an jeweils an einem Schlitten und einem Lastbalken verschwenkbar angelenkte Hebel, wobei der Lastbalken, die Schlitten und die Hebel ein Parallelogramm bilden.

### AUFGABE UND LÖSUNG

Es ist eine Aufgabe der vorliegenden Erfindung, eine Hubvorrichtung mit einer Antriebsvorrichtung zu schaffen, durch welche hohe Kräfte auf kleinem Bauraum erzeugbar sind. Es ist eine weitere Aufgabe der vorliegenden Erfindung, eine Station einer Verpackungsmaschine mit einer Antriebsvorrichtung zu schaffen, insbesondere eine Station einer Tiefziehverpackungsmaschine.

Diese Aufgabe wird gelöst durch die Gegenstände der Ansprüche 1 und 8. Weitere vorteilhafte Ausgestaltungen ergeben sich aus den Unteransprüchen.

Gemäß einem ersten Aspekt wird eine Hubvorrichtung umfassend eine Basis, eine Antriebsvorrichtung zur Erzeugung einer hin- und hergehenden Bewegung eines Bauteils relativ zu der Basis entlang einer ersten Richtung und eine Führungsvorrichtung geschaffen, wobei mittels der Führungsvorrichtung das Bauteil oder die Basis in der ersten Richtung verschieblich geführt ist und mittels der Führungsvorrichtung eine Relativbewegung zwischen dem Bauteil und der Basis in der zweiten Richtung gesperrt ist, und wobei die Antriebsvorrichtung einen entlang einer zweiten Richtung verschieblich an der Basis angeordneten Schlitten, eine Antriebseinheit und mindestens zwei an dem Schlitten und dem Bauteil verschwenkbar angelenkte Hebel umfasst, das Bauteil, der Schlitten und die Hebel ein Parallelogramm bilden, der Schlitten mittels der Antriebseinheit entlang der zweiten Richtung verfahrbar ist und die Bewegung des Schlittens mittels der Hebel in eine Bewegung des Bauteils relativ zu der Basis entlang der ersten Richtung umwandelbar ist.

Erfindungsgemäß werden je nach Ausgestaltung das Bauteil oder die Basis entlang der ersten Richtung gegenüber einem dem jeweils anderen Element zugeordneten Bezugssystem bewegt. Das die hin- und hergehende Bewegung in der ersten Richtung durchführende Element, d. h. das Bauteil oder die Basis, ist in einer geeigneten Führungsvorrichtung aufgenommen und mittels der Führungsvorrichtung in der ersten Richtung verschieblich und in der zweiten Richtung ortsfest gegenüber dem Bezugssystem geführt. Die erste und die zweite Richtung stehen in vorteilhaften Ausgestaltungen senkrecht zueinander. Die Antriebsvorrichtung zeichnet sich durch einen geringen, unter anderem von der Länge der Hebel abhängigen Bauraumbedarf aus.

In einigen Ausgestaltungen sind die Basis und damit die Antriebseinheit ortsfest anordenbar, sodass keine Kräfte für eine Verlagerung der Antriebseinheit aufzubringen sind. Das Bauteil wird dabei relativ zu der ortsfest angeordneten Basis bewegt. In anderen Ausgestaltungen wird die Basis zur Bewegung gegenüber dem Bauteil angetrieben, wobei die Basis mittels einer geeigneten Führungsvorrichtung entlang der ersten Richtung verstellbar und in der zweiten Richtung ortsfest bezüglich des Bauteils gelagert ist. Dabei bewirkt eine Bewegung des Schlittens relativ zu der Basis entlang der zweiten Richtung eine Bewegung der Basis relativ zu dem Bauteil in der ersten Richtung. Das Bauteil ist dabei in einer Ausgestaltung mittels einer weiteren Antriebsvorrichtung bewegbar, in anderen Ausgestaltungen ist das Bauteil ortsfest in einem Inertialsystem angeordnet.

In einer vorteilhaften Ausgestaltung ist der Schlitten mittels der Antriebseinheit in horizontaler Richtung verfahrbar, wobei die Bewegung des Schlittens in horizontaler Richtung mittels der mindestens zwei Hebel in eine Hub- und Senkbewegung des Bauteils relativ zu der Basis in vertikaler Richtung umwandelbar ist. Dies ermöglicht eine Gestaltung, bei welcher eine Hub- und Senkbewegung eines als Hubplatte gestalteten Bauteils möglich ist, ohne dass hierfür Elemente der Antriebseinheit in vertikaler Richtung verlagert werden. In anderen Ausgestaltungen ist ein Werkzeug oder dergleichen mit der Basis gekoppelt, wobei die Basis relativ zu dem Bauteil verlagert wird.

Ein Antrieb des Schlittens erfolgt beispielsweise mittels eines hydraulischen Antriebs, eines pneumatischen Antriebs und/oder mittels einer Zahnstange. In vorteilhaften Ausgestaltungen ist die Antriebseinheit als Spindelantrieb gestaltet, wobei der Spindelantrieb vorzugsweise einen Planetengewindetrieb umfasst. Ein Spindelantrieb ermöglicht eine exakte Ansteuerung mittels eines Elektromotors, insbesondere eines Servomotors, wobei gewünschte Bewegungsmuster des Bauteils durch eine entsprechende Ansteuerung des Servomotors erzielbar sind. Eine Ankopplung einer Spindel des Spindelantriebs an den Servomotor erfolgt in vorteilhaften Ausgestaltungen mittels eines Übersetzungsgetriebes, welches durch den Fachmann je nach Anwendungsfall geeignet ausgelegt werden kann. An der Spindel ist eine Spindelmutter vorgesehen, in welcher in vorteilhaften Ausgestaltungen ein Planetengewindetrieb angeordnet ist. Ein Planetengewindetrieb zeichnet sich durch eine hohe Tragfähigkeit und eine hohe Steifigkeit, bei einem kleinen Bauraumbedarf aus. Eine Bewegungsumwandlung mittels Planetengewindetrieb ist daher besonders vorteilhaft. Es sind jedoch auch andere Gestaltungen denkbar.

In vorteilhaften Ausgestaltungen ist an der Basis eine Schienenführung vorgesehen, wobei der Schlitten mindestens zwei miteinander gekoppelte Führungswagen umfasst, welche entlang der Schienenführung verfahrbar sind. Dadurch wird ein modularer Aufbau geschaffen. Die Zahl der Schlitten ist dabei je nach Anwendungsfall und Belastung an einer zugehörigen Station geeignet wählbar.

Ein maximaler Hub des Bauteils ist von einer Länge der Hebel und einer Bewegung des Schlittens abhängig. In einer Ausgestaltung wird eine Bewegungsrichtung des Schlittens im oder nahe eines oberen Totpunkts des Hebels umgekehrt. In vorteilhaften Ausgestaltungen sind die Hebel derart an dem Schlitten und/oder dem Bauteil angebracht sind, dass ein Überfahren eines oberen Totpunkts möglich ist. Umkehrpunkte der Bewegung des Schlittens liegend dabei beidseits des Totpunkts, vorzugsweise mit gleichem Abstand zu dem Totpunkt. Eine Arbeitsposition eines durch das Bauteil aufgenommen Werkzeugs ist vorzugsweise in dem oberen Totpunkt, d.h. bei einer maximalen Entfernung des Bauteils von der Basis in der ersten Richtung gewählt. Durch die Möglichkeit, den oberen Totpunkt zu überfahren, sind Bewegungen des Bauteils mit hohen Taktzahlen realisierbar, wobei sichergestellt ist, dass die Arbeitsposition in jedem Takt zuverlässig angefahren wird. Dabei werden in der Arbeitsposition in dem oberen Totpunkt keine Kräfte in die Antriebseinheit eingeleitet. Die Hebel sind ausreichend dimensioniert, um ein Ausknicken der Hebel in der Arbeitsposition zu vermeiden.

Die Hebel weisen eine ausreichende Steifigkeit für eine Bewegungs- und Kraftübertragung auf. In vorteilhaften Ausgestaltungen sind mindestens zwei, beispielsweise drei, vier oder sechs, in der zweiten Richtung gleichmäßig verteilt angeordnete, baugleiche Hebel vorgesehen. Die gleichmäßig verteilt angeordneten Hebel erlauben eine gleichmäßige Krafteinleitung.

Um eine Kippbewegung zu verhindern, sind in einer Ausgestaltung die Hebel jeweils als Pleuelstangenpaar gestaltet, wobei Pleuelstangen eines Pleuelstangenpaares an gegenüberliegenden Schmalseiten des Bauteils und/oder der Halteplattform angeordnet sind. Dadurch ist eine gleichmäßige Krafteinleitung gewährleistet. In anderen Ausgestaltungen sind die Hebel an einer ersten und einer zweiten Schmalseite asymmetrisch, beispielsweise auf Lücke versetzt angeordnet. Für eine gleichmäßige Krafteinleitung ist dabei in einer Ausgestaltung eine Tragplatte oder dergleichen vorgesehen.

Die Führungsvorrichtung umfasst in einer Ausgestaltung sich entlang der ersten Richtung erstreckende Schienen, entlang welcher das die Bewegung ausführende Element geführt ist. In anderen Ausgestaltungen sind Führungsstangen vorgesehen.

Gemäß einem zweiten Aspekt wird eine Station einer Verpackungsmaschine geschaffen mit mindestens einem eine hin- und hergehende Bewegung in einer ersten Richtung relativ zu einer Basis durchführenden ersten Bauteil, einer Führungsvorrichtung, mittels welcher das erste Bauteil und/oder die Basis in der ersten Richtung verschieblich geführt ist, und mindestens einer Antriebsvorrichtung zur Erzeugung der hin- und hergehenden Bewegung eines Bauteils entlang einer ersten Richtung relativ zu einer Basis. In einer Ausgestaltung ist die Basis ortsfest angeordnet, wobei das erste Bauteil vorzugsweise eine Hub- und Senkbewegung ausführt. In anderen Ausgestaltungen ist das erste Bauteil ortsfest angeordnet, wobei die Basis eine Hub- und Senkbewegung ausführt. Das bewegte Bauteil oder die bewegte Basis dient beispielsweise als Träger für ein Formwerkzeug, ein Stanzwerkzeug oder ein Schließwerkzeug und/oder zum Anheben einer Last. Die Führungsvorrichtung ist vorzugsweise derart gestaltet, dass die Bewegung des bewegten Elements in andere als die erste Richtung gesperrt ist.

In einer Ausgestaltung ist eine zweite Antriebsvorrichtung vorgesehen, wobei die zweite Antriebsvorrichtung ein relativ zu einer Basis entlang der ersten Richtung bewegbares zweites Bauteil umfasst und im Wesentlichen baugleich der ersten Antriebsvorrichtung gestaltet ist, und wobei mittels der zweiten Antriebsvorrichtung eine hin- und hergehende Bewegung eines Trägerelements gegenläufig zu der Bewegung des ersten Bauteils erzeugbar ist. Das Trägerelement ist mit der Basis oder dem relativ dazu bewegten zweiten Bauteil der zweiten Antriebsvorrichtung gekoppelt oder einstückig mit diesen gestaltet ist. An dem ersten Bauteil und dem Trägerelement sind beispielsweise ein Ober- und ein Unterwerkzeug einer Formstation gelagert. Die Antriebseinheiten der Antriebsvorrichtungen werden dabei synchronisiert betrieben. Die Schlitten sind mittels der Antriebseinheiten gleich- oder gegenläufig verstellbar. In einer Ausgestaltung sind die erste und die zweite Basis beide ortsfest an einem gemeinsamen Gestell gelagert, wobei das erste Bauteil der ersten Antriebsvorrichtung und das zweite Bauteil der zweiten Antriebsvorrichtung jeweils relativ zu der zugehörigen Basis verlagerbar an dem Gestell angeordnet sind. In einer anderen Ausgestaltung ist zumindest eine Basis in der ersten Richtung verlagerbar an dem Gestell angeordnet, wobei ein zugehöriges Bauteil der Antriebsvorrichtung ortsfest angeordnet ist.

In einer Ausgestaltung ist das Trägerelement mit dem zur Bewegung angetriebenen Element der zweiten Antriebsvorrichtung, d.h. dem zweiten Bauteil oder der Basis der zweiten Antriebsvorrichtung, mittels sich in der ersten Richtung erstreckenden Führungsstangen verbunden, wobei die Führungsstangen als Führungsvorrichtung für das zur Bewegung angetriebene Element der ersten Antriebsvorrichtung, d. h. das erste Bauteil oder die Basis der ersten Antriebsvorrichtung, dient. Dadurch ist eine besonders kompakte Bauform realisiert.

Alternativ oder zusätzlich zu der zweiten Antriebsvorrichtung ist in einer anderen Ausgestaltung eine dritte Antriebsvorrichtung vorgesehen, wobei die dritte Antriebsvorrichtung im Wesentlichen baugleich der ersten Antriebsvorrichtung gestaltet ist, die dritte Antriebsvorrichtung an dem ersten Bauteil oder an der Basis der ersten Antriebsvorrichtung angeordnet ist und mittels der dritten Antriebsvorrichtung eine hin- und her gehende Bewegung eines zweiten Trägerelements relativ zu dem ersten Bauteil bzw. der Basis erzeugbar ist. An der bewegten Basis oder dem bewegten Bauteil der ersten Antriebseinheit ist dabei beispielsweise ein erstes Werkzeug angeordnet. Zusätzlich ist mittels der dritten Antriebseinheit ein zweites Trägerelement und ein damit verbundenes zweites Werkzeug relativ zu dem ersten Werkzeug verlagerbar.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1;: eine geschnittene Seitenansicht einer Antriebsvorrichtung in einem ersten Zustand;
- Fig. 2:: eine geschnittene Seitenansicht der Antriebsvorrichtung gemäß Fig. 1 in einem oberen Totpunkt;
- Fig. 3:: eine Seitenansicht der Antriebsvorrichtung gemäß Fig. 1 in einem oberen Totpunkt;
- Fig. 4:: eine Formstation einer Verpackungsmaschine mit drei in Reihe geschalteten Antriebsvorrichtungen und
- Fig. 5:: eine Formstation einer Verpackungsmaschine mit zwei gegenläufig bewegten Antriebsvorrichtungen.

### DETAILLIERTE BESCHREIBUNG DER AUSFÜHRUNGSBEISPIELE

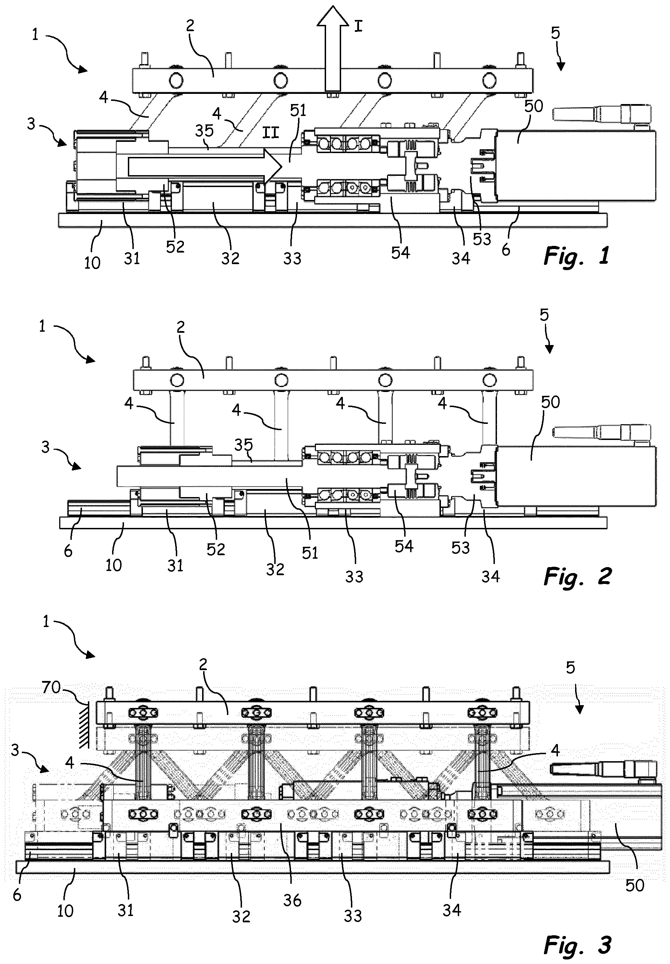

Fig. 1 bis 3 zeigen schematisch eine Antriebsvorrichtung 1 mit einer Basis 10. Dabei zeigen Fig. 1 und 2 die Antriebsvorrichtung 1 in einer geschnittenen Seitenansicht in einem unteren Umkehrpunkt und einem oberen Totpunkt. Fig. 3 zeigt eine Seitenansicht der Antriebsvorrichtung 1 einem oberen Totpunkt, wobei ein linker und ein rechter Umkehrpunkt der Bewegung ebenfalls dargestellt sind.

Mittels der Antriebsvorrichtung 1 ist einer hin- und hergehenden Bewegung eines als Hubplatte gestalteten Bauteils 2 entlang einer ersten Richtung I relativ zu der Basis 10 erzeugbar. In dem dargestellten Ausführungsbeispiel ist mittels der Antriebsvorrichtung 1 eine Hub- und Senkbewegung der Hubplatte in vertikaler Richtung relativ zu der Basis 10 erzeugbar. Die Basis 10 ist ortsfest in einem Inertialsystem angeordnet oder mittels eines weiteren, nicht dargestellten Systems verlagerbar. Die Hubplatte ist mittels einer in Fig. 3 schematisch dargestellten Führungsvorrichtung 70 in vertikaler Richtung verschieblich gelagert, wobei Bewegungen der Hubplatte in andere Richtungen relativ zu der Basis 10 gesperrt sind. An dem als Hubplatte gestalteten Bauteil 2 ist ein nicht dargestelltes Werkzeug, beispielsweise ein Stanzwerkzeug anbringbar.

Die Antriebsvorrichtung 1 umfasst einen an der Basis 10 entlang einer zweiten Richtung II verschieblich gelagerten Schlitten 3 sowie vier an dem Schlitten 3 und dem Bauteil 2 verschwenkbare angeordnete Hebel 4. Der Schlitten 3 ist mittels einer Antriebseinheit 5 entlang einer zweiten Richtung II verfahrbar. In dem dargestellten Ausführungsbeispiel ist der Schlitten 3 in horizontaler Richtung verfahrbar. Die horizontale Bewegung des Schlittens 3 wird mittels der Hebel 4 in eine vertikale Bewegung des Bauteils 2 relativ zu der Basis 10 umgewandelt. Die Hebel 4 sind vorzugsweise als Pleuelstangenpaar gestaltet, wobei durch zwei parallel geführte Pleuelstangen eines Pleuelstangenpaars, welche an gegenüberliegenden Schmalseiten des Bauteils 2 angeordnet sind, eine Kippbewegung um eine horizontale Achse verhindert wird. Das Bauteil 2, der Schlitten 3 und jeweils zwei der Hebel 4 bilden ein Parallelogramm. Die jeweils zwei weiteren Hebel 4 erhöhen eine Stabilität der Vorrichtung. Die Hebel 4 sind in dem dargestellten Ausführungsbeispiel gleichmäßig verteilt angeordnet, um eine gleichmäßige Krafteinleitung zu bewirken.

In dem dargestellten Ausführungsbeispiel umfasst der Schlitten 3 vier Führungswagen 31, 32, 33, 34. Die Führungswagen 31, 32, 33, 34 sind miteinander mittels zweier Rahmenelemente 35, 36 gekoppelt und zusammen entlang einer Schienenführung 6 verfahrbar.

Die dargestellte Antriebseinheit 5 für den Schlitten 3 ist als Spindelantrieb gestaltet. Der Spindelantrieb umfasst einen elektromotorischen Antrieb 50, insbesondere einen Servomotor, welcher eine Spindel 51 zur Rotation antreibt. Die Spindel 51 wirkt mit einer Mutter 52 mit einem Planetengewindetrieb zusammen. Die Mutter 52 ist mechanisch ortsfest in einem der Führungswagen 31 gelagert. In dem dargestellten Ausführungsbeispiel ist die Mutter 52 in den Rahmenelementen 35, 36 an einem dem Servomotor 50 gegenüberliegenden Ende des Schlittens gelagert.

Die Spindel 51 ist in einem geeigneten Lager drehbar gelagert. In dem dargestellten Ausführungsbeispiel sind zwischen dem Servomotor 50 und der Spindel 51 ein Übersetzungsgetriebe 53 und eine Kupplung 54 vorgesehen.

Die durch die Antriebseinheit 5 bewirkte horizontale Bewegung des Schlittens 3 relativ zu der Basis 2 wird mittels der Hebel 4 in eine vertikale Bewegung des Bauteils 2, d.h. beispielsweise der Hubplatte, relativ zu der Basis 2 umgewandelt. Bei einer geradlinigen Bewegung des Schlittens 3 erfolgt dabei eine sinusförmige Bewegung des Bauteils 2. Dabei erfolgt zunächst eine schnellere Bewegung des Bauteils in vertikaler Richtung. Mit Annäherung an einen oberen Totpunkt wird die Bewegung langsamer. In einem oberen Totpunkt der Hebel 4 ist der Spindelantrieb 5 lastfrei. Selbstverständlich ist es denkbar, an dem Schlitten eine andere Bewegung vorzugeben. Wie in Fig. 3 erkennbar ist, sind die Hebel 4 derart an dem Bauteil 2 und dem Schlitten 3 angelenkt, dass eine Verschwenkbewegung über einen oberen Totpunkt hinweg, zwischen zwei durch die Bewegung des Schlittens 3 festgelegten Umkehrpunkten erfolgt. Dadurch ist eine hohe Taktzahl erzielbar, wobei für jeden Takt ein Erreichen der Maximalposition des Bauteils 2 im oberen Totpunkt sichergestellt ist.

In einer alternativen, nicht in den Figuren dargestellten Verwendung der Antriebsvorrichtung 1 ist das Bauteil 2 ortsfest gelagert und die Basis 10 als Hubplatte gestaltet, welche entlang der ersten Richtung I relativ zu dem Bauteil 2 verschieblich gelagert ist.

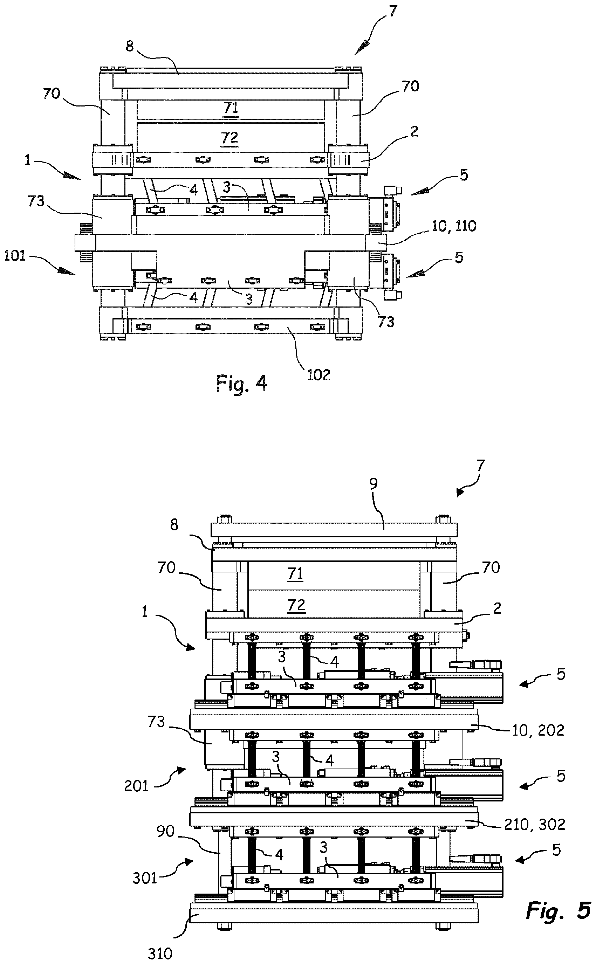

Fig. 4 zeigt eine Formstation 7 einer nicht dargestellten Verpackungsmaschine mit zwei Antriebsvorrichtungen 1, 101. Die dargestellte Formstation 7 umfasst vier vertikale Führungsstangen 70, ein mit den Führungsstangen 70 fest verbundenes Trägerelement 8, an welchem ein Oberwerkzeug 71 vorgesehen ist, und ein mit dem Oberwerkzeug 71 zusammenwirkendes, eine Hub- und Senkbewegung durchführendes Unterwerkzeug 72. Ein Material oder ein zu bearbeitendes Werkstück, beispielsweise eine tiefzuziehende Folie, wird zwischen dem Unterwerkzeug 72 und dem Oberwerkzeug 71 geführt.

Ein Antrieb des Unterwerkzeugs 72 erfolgt mittels einer ersten Antriebsvorrichtung 1. Die Antriebsvorrichtung 1 umfasst eine Basis 10 und ein relativ dazu bewegbares, als Hubplatte gestaltetes Bauteil 2, welches an den seitlichen Führungsstangen 70 für eine Bewegung in vertikaler Richtung relativ zu der Basis 10 geführt ist. An dem als Hubplatte gestalteten Bauteil 2 der ersten Antriebsvorrichtung 1 ist das Unterwerkzeug 72 angeordnet. Die Basis 10 ist dabei vorzugsweise ortsfest angeordnet. Eine hin- und hergehende Bewegung des Schlittens 3 der ersten Antriebsvorrichtung 1 in horizontaler Richtung relativ zu der Basis 10 bewirkt dabei eine hin- und hergehende Hub- und Senkbewegung des Unterwerkzeugs 72.

Ein Antrieb des Oberwerkzeugs 71 erfolgt mittels einer zweiten Antriebsvorrichtungen 101. Die zweiten Antriebsvorrichtung 101 ist im Wesentlichen baugleich der ersten Antriebsvorrichtung 1 gestaltet. Die Basis 10 der ersten Antriebsvorrichtung 1 dient in dem dargestellten Ausführungsbeispiel auch als Basis 110 der zweiten Antriebsvorrichtung 101. Weiter umfasst die zweiten Antriebsvorrichtung 101 ein relativ zu der Basis 110 in vertikaler Richtung bewegbares Bauteil 102, welches mit den Führungsstangen 70 fest verbunden ist. Die Führungsstangen 70 sind in Führungshülsen 73 geführt, so dass die Führungsstangen 70 und damit das Bauteil 102 in vertikaler Richtung verschieblich gelagert sind, wobei Bewegungen der Führungsstangen 70 und damit des Bauteils 102 in andere Richtungen relativ zu der Basis 110 gesperrt sind. In dem dargestellten Ausführungsbeispiel sind die Führungshülsen 73 an der Basis 10 vorgesehen.

Mittels Hebel 4 wird eine horizontale Bewegung eines Schlittens 3 der zweiten Antriebsvorrichtung 101 relativ zu der Basis 110 in eine vertikale Bewegung des Bauteils 102 relativ zu der Basis 110 transformiert. Mittels der Führungsstangen 70 wird die Bewegung des Bauteils 102 auf das mit den Führungsstangen 70 verbundene Trägerelement 8 und somit auf das Oberwerkzeug 71 übertragen.

Die Führungsstangen 70 haben in dem dargestellten Ausführungsbeispiel eine Doppelfunktion, da sie sowohl einer Führung des Bauteils 2 der ersten Antriebsvorrichtung 1 als auch einer Bewegungsübertragung von dem Bauteil 102 der zweiten Antriebsvorrichtung 101 auf das Trägerelement 8 dienen. Dadurch wird ein besonders kompakter Aufbau realisiert.

Die Antriebseinheiten 5 der Antriebsvorrichtungen 1, 101 sind mittels einer geeigneten Regel- und/oder Steuereinrichtung für einen gewünschten, gegenläufigen Bewegungsverlauf des Oberwerkzeugs 71 und des Unterwerkzeugs 72 geeignet synchronisiert antreibbar. Ein Antrieb erfolgt vorzugsweise derart, dass die Hebel 4 sämtlicher Antriebsvorrichtungen 1 zeitgleich einen Totpunkt der Bewegung erreichen, wobei das Oberwerkzeugs 71 und das Unterwerkzeug 72 in diesem Zustand eine Schließposition einnehmen. Die Schlitten 3 der Antriebsvorrichtungen 1, 101 sind zu diesem Zweck gleich- oder gegensinnig zwischen den Umkehrpunkten bewegbar.

Sämtliche Schmierstellen für die Antriebseinheiten 5 sind dabei unterhalb einer Ebene des zu bearbeitenden Materials gelegen.

Fig. 5 zeigt eine alternative Gestaltung einer Formstation 7 einer Verpackungsmaschine mit zwei Antriebsvorrichtungen 1, 201. Die Ausgestaltung ist ähnlich Fig. 4 und für gleiche oder ähnliche Bauteile werden einheitliche Bezugszeichen verwendet. Die in Fig. 5 dargestellte Formstation 7 umfasst ein eine Hub- und Senkbewegung durchführendes Oberwerkzeug 71 und ein damit zusammenwirkendes, eine gegenläufige Hub- und Senkbewegung durchführendes Unterwerkzeug 72. Ein Material oder Werkstück, insbesondere eine tiefzuziehende Folie wird zwischen dem Unterwerkzeug 72 und dem Oberwerkzeug 71 geführt.

Ein Antrieb des Unterwerkzeugs 72 erfolgt analog zu der Formstation 7 gemäß Fig. 4 mittels einer Antriebsvorrichtung 1 umfassend eine Basis 10 und ein relativ dazu in vertikaler Richtung bewegbares Bauteil 2, wobei das Unterwerkzeug 72 an dem als Hubplatte gestalteten Bauteil 2 angeordnet ist. Die Hubplatte ist parallel zu einem zugehörigen Schlitten 3 oberhalb des Schlittens 3 angeordnet. Das Bauteil 2 ist in seitlichen Führungsstangen 70 geführt.

Ein Antrieb des Oberwerkzeugs 71 erfolgt mittels einer zweiten Antriebsvorrichtung 201 umfassend ein ortsfest gelagertes Bauteil 202 und eine relativ zu dem Bauteil 202 bewegbare Basis 210. Die Basis 10 der ersten Antriebsvorrichtung 1 fungiert dabei als Bauteil 202. Auch die zweite Antriebsvorrichtung 201 gemäß Fig. 5 ist im Wesentlichen baugleich der ersten Antriebsvorrichtung 1 gestaltet. Im Unterschied zu der Ausgestaltung gemäß Fig. 4 ist aber eine Basis 210 der zweiten Antriebsvorrichtung 201 nicht ortsfest zu der Basis 10 der ersten Antriebsvorrichtung 1 angeordnet, sondern relativ zu der als Bauteil 202 der zweiten Antriebsvorrichtung 201 fungierenden Basis 10 der ersten Antriebsvorrichtung 1 in vertikaler Richtung bewegbar. An der Basis 210 ist ein Schlitten 3 in horizontaler Richtung relativ zu der Basis 210 verfahrbar angeordnet. Die Basis 210 ist mit den Führungsstangen 70 fest verbunden. Die Führungsstangen 70 sind in Führungshülsen 73 geführt, so dass die Führungsstangen 70 und damit die Basis 210 in vertikaler Richtung relativ zu der Basis 10 verschieblich gelagert sind, wobei Bewegungen der Führungsstangen 70 und damit der Basis 210 in andere Richtungen relativ zu dem Bauteil 202 gesperrt sind. Eine durch die Antriebseinheit 5 der zweiten Antriebsvorrichtung 201 verursachte Bewegung des Schlittens 3 in horizontaler Richtung bewirkt eine Verstellbewegung der Basis 210 relativ zu der Basis 10 in vertikaler Richtung und so eine Verstellbewegung des Bauteils 202 relativ zu der Basis 210 in vertikaler Richtung. Mittels der Führungsstangen 70 wird die Bewegung der Basis 210 auf ein mit den Führungsstangen 70 verbundenes Trägerelement 8 und somit auf das Oberwerkzeug 71 übertragen.

Auch die Antriebseinheiten 5 der Antriebsvorrichtungen 1, 201 sind mittels einer geeigneten Regel- und/oder Steuereinrichtung für einen gewünschten, gegenläufigen Bewegungsverlauf des Oberwerkzeugs 71 und des Unterwerkzeugs 72 synchronisiert antreibbar.

Zudem ist bei der Ausgestaltung gemäß Fig. 5 eine dritte Antriebsvorrichtung 301 vorgesehen, wobei die dritte Antriebsvorrichtung 301 ebenfalls im Wesentlichen baugleich der ersten Antriebsvorrichtung 1 gestaltet ist. Die dritte Antriebsvorrichtung 301 umfasst eine Basis 310, welche relativ zu der als Bauteil 302 der dritten Antriebsvorrichtung 301 fungierenden Basis 210 in vertikaler Richtung verstellbar ist. Mit der Basis 310 ist über Führungsstangen 90 ein zweites Trägerelement 9 verbunden. An dem zweiten Trägerelement 9 ist ein nicht dargestelltes zusätzliches Werkzeug vorgesehen. Bei einer Betätigung der Antriebseinheit 5 der zweiten Antriebsvorrichtung 201 ohne Betätigung der Antriebseinheit 5 der dritten Antriebsvorrichtung 301 führt das zweite Trägerelement 9 und das damit verbundene Werkzeug eine synchrone Bewegung zu dem Oberwerkzeug 71 aus. Mittels der dritten Antriebsvorrichtung 301 ist das zweite Trägerelement 9 relativ zu dem Oberwerkzeug 71 bewegbar.

Die Führungsstangen 70 sind als Hohlstangen gestaltet, sodass die die Basis 310 mit dem zweiten Trägerelement 9 verbindenden Führungsstangen 90 in den Führungsstangen 70 geführt werden können.

Die Führungsstangen 70 haben somit in dem dargestellten Ausführungsbeispiel eine Dreifachfunktion und dienen einer Führung des Bauteils 2 der ersten Antriebsvorrichtung 1, einer Bewegungsübertragung von dem Bauteil 202 der zweiten Antriebsvorrichtung 201 auf das Trägerelement 8 und einer Führung der Führungsstangen 90 des zweiten Trägerelements 9. Dadurch wird ein besonders kompakter Aufbau realisiert.

Die dritte Antriebsvorrichtung 301 ist in einer alternativen Ausgestaltung an dem das Oberwerkzeug 71 tragenden Trägerelement 8 angeordnet. Die Gestaltung gemäß Fig. 5 hat jedoch den Vorteil, dass sämtliche Schmierstellen für die Antriebseinheiten 5 unterhalb einer Ebene des zu bearbeitenden Materials gelegen sind.

Die Gestaltungen der Formstationen 7 gemäß den Fig. 4 und 5 sind besonders vorteilhaft. Für den Fachmann ist jedoch erkennbar, dass zahlreiche Modifikationen denkbar sind, wodurch Stationen mit einem oder mehreren bewegbaren Bauteilen geschaffen werden. Beispielsweise ist es denkbar, auf eine dritte Antriebsvorrichtung 301 bei einer Ausgestaltung gemäß Fig. 5 zu verzichten und/oder eine dritte Antriebsvorrichtung bei einer Ausgestaltung gemäß Fig. 4 vorzusehen.

## Patentansprüche

1. Hubvorrichtung umfassend eine Basis (10), eine Antriebsvorrichtung zur Erzeugung einer hin- und hergehenden Bewegung eines Bauteils (2) entlang einer ersten Richtung (I) relativ zu der Basis (10) und eine Führungsvorrichtung, wobei mittels der Führungsvorrichtung das Bauteil (2) oder die Basis (10) in der ersten Richtung (I) verschieblich geführt ist und mittels der Führungsvorrichtung eine Relativbewegung zwischen dem Bauteil (2) und der Basis (10) in der zweiten Richtung (II) gesperrt ist, **dadurch gekennzeichnet, dass** die Antriebsvorrichtung einen entlang einer zweiten Richtung (II) verschieblich an der Basis (10) angeordneten Schlitten (3), eine Antriebseinheit (5) und mindestens zwei an dem Schlitten (3) und dem Bauteil (2) verschwenkbar angelenkte Hebel (4) umfasst, wobei das Bauteil (2), der Schlitten (3) und die Hebel (4) ein Parallelogramm bilden, der Schlitten (3) mittels der Antriebseinheit (5) entlang der zweiten Richtung (II) verfahrbar ist und die Bewegung des Schlittens (3) mittels der Hebel (4) in eine Bewegung des Bauteils (2) relativ zu der Basis (3) entlang der ersten Richtung (I) umwandelbar ist.

2. Hubvorrichtung nach Anspruch 1, **dadurch gekennzeichnet, dass** der Schlitten (3) mittels der Antriebseinheit (5) in horizontaler Richtung verfahrbar ist und die Bewegung des Schlittens (3) in horizontaler Richtung mittels der mindestens zwei Hebel (4) in eine Hub- und Senkbewegung des Bauteils (2) relativ zu der Basis (10) in vertikaler Richtung umwandelbar ist.

3. Hubvorrichtung nach Anspruch 1 oder 2, **dadurch gekennzeichnet, dass** die Antriebseinheit (5) als Spindelantrieb gestaltet ist, wobei der Spindelantrieb vorzugsweise ein Planetengewindetrieb (52) umfasst.

4. Hubvorrichtung nach Anspruch 1, 2 oder 3, **dadurch gekennzeichnet, dass** an der Basis (10) eine Schienenführung (6) vorgesehen ist und der Schlitten (3) mindestens zwei miteinander gekoppelte Führungswagen (31, 32, 33, 34) umfasst, welche entlang der Schienenführung (6) verfahrbar sind.

5. Hubvorrichtung nach Anspruch 1 bis 4, **dadurch gekennzeichnet, dass** die Hebel (4) derart an dem Schlitten (3) und/oder dem Bauteil (2) angebracht sind, dass ein Überfahren eines oberen Totpunkts möglich ist.

6. Hubvorrichtung nach einem der Ansprüche 1 bis 5, **dadurch gekennzeichnet, dass** mindestens zwei in der zweiten Richtung (II) gleichmäßig verteilt angeordnete, baugleiche Hebel (4) vorgesehen sind.

7. Hubvorrichtung nach einem der Ansprüche 1 bis 6, **dadurch gekennzeichnet, dass** die Hebel (4) jeweils als Pleuelstangenpaar gestaltet sind.

8. Station einer Verpackungsmaschine mit einer Hubvorrichtung nach einem der Ansprüche 1 bis 7.

9. Station einer Verpackungsmaschine nach Anspruch 8, **dadurch gekennzeichnet, dass** mindestens eine zweite Antriebsvorrichtung (1) vorgesehen ist, wobei die zweite Antriebsvorrichtung (101, 201) ein relativ zu einer Basis (110, 210) entlang der ersten Richtung (I) bewegbares zweites Bauteil (102, 202) umfasst und im Wesentlichen baugleich der ersten Antriebsvorrichtung (1) gestaltet ist, und wobei mittels der zweiten Antriebsvorrichtung (101, 201) eine hin- und hergehende Bewegung eines Trägerelements (8) gegenläufig zu der Bewegung des ersten Bauteils (2) erzeugbar ist.

10. Station einer Verpackungsmaschine nach Anspruch 9, **dadurch gekennzeichnet, dass** das Trägerelement (8) mit dem zweiten Bauteil (102, 202) oder der Basis (110, 210) der zweite Antriebsvorrichtung (101, 201) mittels sich in der ersten Richtung (I) erstreckenden Führungsstangen (70) verbunden ist, wobei die Führungsstangen (70) als Führungsvorrichtung für das erste Bauteil (2) oder die Basis (10) der ersten Antriebsvorrichtung (1) dient.

11. Station einer Verpackungsmaschine nach Anspruch 8, 9 oder 10, **dadurch gekennzeichnet, dass** eine dritte Antriebsvorrichtung (301) vorgesehen ist, wobei die dritte Antriebsvorrichtung (301) im Wesentlichen baugleich der ersten Antriebsvorrichtung (1) gestaltet ist, die dritte Antriebsvorrichtung (301) an dem ersten Bauteil (2) oder an der Basis (10) der ersten Antriebsvorrichtung (1) angeordnet ist und mittels der dritten Antriebsvorrichtung (301) eine hin- und hergehende Bewegung eines zweiten Trägerelements (9) relativ zu dem ersten Bauteil (2) bzw. der Basis (10) erzeugbar ist.

## Claims

1. Reciprocating device comprising a base (10), a drive device for producing a to and fro movement of a component (2) along a first direction (I) relative to the base (10), and a guide device, wherein the component (2) or the base (10) is displaceably guided in the first direction (I) by means of the guide device, and a relative movement between the component (2) and the base (10) in the second direction (II) is blocked by means of the guide device, **characterized in that** the drive device comprises a slide (3) arranged on the base (10) so as to be displaceable along a second direction (II), a drive unit (5) and at least two levers (4) pivotably attached to the slide (3) and the component (2), wherein the component (2), the slide (3) and the levers (4) form a parallelogram, the slide (3) can be moved along the second direction (II) by means of the drive unit (5), and the movement of the slide (3) can be converted by means of the levers (4) into a movement of the component (2) along the first direction (I) relative to the base (3).

2. Reciprocating device according to Claim 1, **characterized in that** the slide (3) can be moved in the horizontal direction by means of the drive unit (5), and the movement of the slide (3) in the horizontal direction can be converted by means of the at least two levers (4) into a lifting and lowering movement of the component (2) in the vertical direction relative to the base (10).

3. Reciprocating device according to Claim 1 or 2, **characterized in that** the drive unit (5) is configured as a spindle drive, wherein the spindle drive preferably comprises a planetary screw drive (52).

4. Reciprocating device according to Claim 1, 2 or 3, **characterized in that** a rail guide (6) is provided on the base (10), and the slide (3) comprises at least two guide carriages (31, 32, 33, 34) which are coupled to one another and which can be moved along the rail guide (6).

5. Reciprocating device according to Claim 1 to 4, **characterized in that** the levers (4) are attached to the slide (3) and/or the component (2) in such a way that it is possible to move over an upper dead centre point.

6. Reciprocating device according to one of Claims 1 to 5, **characterized in that** at least two identical levers (4) distributed uniformly in the second direction (II) are provided.

7. Reciprocating device according to one of Claims 1 to 6, **characterized in that** the levers (4) are each configured as a pair of connecting rods.

8. Station of a packaging machine comprising a reciprocating device according to one of Claims 1 to 7.

9. Station of a packaging machine according to Claim 8, **characterized in that** at least one second drive device (1) is provided, wherein the second drive device (101, 201) comprises a second component (102, 202) that can be moved along the first direction (I) relative to a base (110, 210) and is configured substantially identically to the first drive device (1), and wherein a to and fro movement of a carrier element (8) in the opposite direction to the movement of the first component (2) can be produced by means of the second drive device (101, 201).

10. Station of a packaging machine according to Claim 9, **characterized in that** the carrier element (8) is connected to the second component (102, 202) or the base (110, 210) of the second drive device (101, 201) by means of guide rods (70) extending in the first direction (I), wherein the guide rods (70) serve as a guide device for the first component (2) or the base (10) of the first drive device (1).

11. Station of a packaging machine according to Claim 8, 9 or 10, **characterized in that** a third drive device (301) is provided, wherein the third drive device (301) is configured substantially identically to the first drive device (1), the third drive device (301) is arranged on the first component (2) or on the base (10) of the first drive device (1), and a to and fro movement of a second carrier element (9) relative to the first component (2) or the base (10) can be produced by means of the third drive device (301).

## Revendications

1. Dispositif de levage comprenant une base (10), un dispositif d'entraînement pour générer un mouvement de va-et-vient d'un composant (2) le long d'une première direction (I) par rapport à la base (10) et un dispositif de guidage, le composant (2) ou la base (10) étant guidé (e) de manière déplaçable dans la première direction (I) au moyen du dispositif de guidage et un mouvement relatif entre le composant (2) et la base (10) dans la deuxième direction (II) étant bloqué au moyen du dispositif de guidage, **caractérisé en ce que** le dispositif d'entraînement comprend un chariot (3) disposé sur la base (10) de manière déplaçable le long d'une deuxième direction (II), une unité d'entraînement (5) et au moins deux leviers (4) articulés de manière à pouvoir pivoter au niveau du chariot (3) et du composant (2), le composant (2), le chariot (3) et les leviers (4) formant un parallélogramme, le chariot (3) pouvant être déplacé au moyen de l'unité d'entraînement (5) le long de la deuxième direction (II) et le déplacement du chariot (3) au moyen des leviers (4) pouvant être converti en un déplacement du composant (2) par rapport à la base (3) le long de la première direction (I).

2. Dispositif de levage selon la revendication 1, **caractérisé en ce que** le chariot (3) peut être déplacé dans la direction horizontale au moyen de l'unité d'entraînement (5) et le déplacement du chariot (3) dans la direction horizontale peut être converti au moyen des au moins deux leviers (4) en un mouvement de levage et d'abaissement du composant (2) par rapport à la base (10) dans la direction verticale.

3. Dispositif de levage selon la revendication 1 ou 2, **caractérisé en ce que** l'unité d'entraînement (5) est configurée sous forme d'entraînement à broche, l'entraînement à broche comprenant de préférence un entraînement à vis planétaire (52).

4. Dispositif de levage selon la revendication 1, 2 ou 3, **caractérisé en ce qu'**un guidage sur rail (6) est prévu au niveau de la base (10) et le chariot (3) comprend au moins deux coulisseaux de guidage (31, 32, 33, 34) accouplés les uns aux autres qui peuvent être déplacés le long du guidage sur rail (6).

5. Dispositif de levage selon la revendication 1 à 4, **caractérisé en ce que** les leviers (4) sont montés sur le chariot (3) et/ou sur le composant (2) de telle sorte qu'un dépassement d'un point mort haut soit possible.

6. Dispositif de levage selon l'une quelconque des revendications 1 à 5, **caractérisé en ce qu'**au moins deux leviers (4) de même construction, disposés de manière répartie uniformément dans la deuxième direction (II), sont prévus.

7. Dispositif de levage selon l'une quelconque des revendications 1 à 6, **caractérisé en ce que** les leviers (4) sont réalisés à chaque fois sous forme de paires de bielles.

8. Station d'une machine d'emballage comprenant un dispositif de levage selon l'une quelconque des revendications 1 à 7.

9. Station d'une machine d'emballage selon la revendication 8, **caractérisée en ce qu'**au moins un deuxième dispositif d'entraînement (1) est prévu, le deuxième dispositif d'entraînement (101, 201) comprenant un deuxième composant (102, 202) déplaçable par rapport à une base (110, 210) le long de la première direction (I) et étant configuré avec une construction essentiellement identique au premier dispositif d'entraînement (1), et un déplacement de va-et-vient d'un élément de support (8) pouvant être généré au moyen du deuxième dispositif d'entraînement (101, 201) en sens inverse du déplacement du premier composant (2).

10. Station d'une machine d'emballage selon la revendication 9, **caractérisée en ce que** l'élément de support (8) est connecté au deuxième composant (102, 202) ou à la base (110, 210) du deuxième dispositif d'entraînement (101, 201) au moyen de barres de guidage (70) s'étendant dans la première direction (I), les barres de guidage (70) servant de dispositif de guidage pour le premier composant (2) ou la base (10) du premier dispositif d'entraînement (1).

11. Station d'une machine d'emballage selon la revendication 8, 9 ou 10, **caractérisée en ce qu'**un troisième dispositif d'entraînement (301) est prévu, le troisième dispositif d'entraînement (301) étant configuré essentiellement avec une construction identique au premier dispositif d'entraînement (1), le troisième dispositif d'entraînement (301) étant disposé au niveau du premier composant (2) ou au niveau de la base (10) du premier dispositif d'entraînement (1) et un mouvement de va-et-vient d'un deuxième élément de support (9) par rapport au premier composant (2) ou à la base (10) pouvant être généré au moyen du troisième dispositif d'entraînement (301).
